# EUROPÄISCHE PATENTSCHRIFT

(11) **EP 1 183 548 B1**
(45) Veröffentlichungstag und Bekanntmachung des Hinweises auf die Patenterteilung: **07.05.2003**
(21) Anmeldenummer: 00943667.6
(22) Anmeldetag: 26.05.2000
(51) Int. Cl.: G01S 3/786, F24J 2/08, H01L 31/052, G02B 5/18, G02B 26/08, G02B 5/32, G05D 3/10

(54) **SONNENFOLGEVORRICHTUNG**
DEVICE WHICH FOLLOWS THE POSITION OF THE SUN
DISPOSITIF DE POURSUITE DE LA POSITION DU SOLEIL

(30) Priorität: 29.05.1999 DE 19924783
(43) Veröffentlichungstag der Anmeldung: 06.03.2002
(73) Patentinhaber: LEONHARD KURZ GMBH & CO., 90763 Fürth (DE)
(72) Erfinder: KURZ, Walter, D-90768 Fürth (DE)
(74) Vertreter: LOUIS, PÖHLAU, LOHRENTZ & SEGETH
(86) Internationale Anmeldenummer: DE0001778
(87) Internationale Veröffentlichungsnummer: WO00073810

(56) Entgegenhaltungen:
- DE-A- 19 716 418
- US-A- 4 456 783
- US-A- 4 723 826
- US-A- 4 765 726
- US-A- 5 491 569
- US-A- 6 025 583

## Beschreibung

Die Erfindung betrifft eine diffraktiv und/oder refraktiv arbeitende optische Einrichtung mit den Merkmalen des Oberbegriffs des Patentanspruchs 1.

In der US 4 765 726 ist eine derartige optische Einrichtung bekannt. Als Nachführeinrichtung sieht dieses Dokument vor, daß entweder eine zusätzliche mechanische Drehanordnung oder eine zweite lichtablenkende Folie eingesetzt wird.

Ferner sind weitere optische Einrichtungen aus der Praxis für den Einsatz in Solaranlagen bekannt, die ebenfalls zur möglichst effizienten Nutzung des Sonnenlichts den Solarelementen zugeordnet sind, um das einfallende Sonnenlicht auf das Solarelement möglichst senkrecht gerichtet zuzuleiten. Es kommen in der Praxis der Solartechnik hierfür meist fokussierende Systeme mit Linsen und Parabolspiegeln zum Einsatz, die das Licht entsprechend umlenken und konzentrieren. Um jeweils optimale Wirkung zu erhalten, werden diese Systeme der Sonnenbewegung nachgeführt. Hierfür sind aufwendig aufgebaute Nachführeinrichtungen erforderlich, die diese meist wohl voluminösen und schweren optischen Einrichtungen präzise nachführen.

Aus der DE 197 16 418 ist eine optische Einrichtung bekannt, bei der der optische Körper als Fresnel-Zylinderlinsen ausgebildet ist, die in einer Glaseindeckung einer Glasdachkonstruktion integriert sind. Die Glaseindeckung mit den Fresnel-Zylinderlinsen ist ortsfest am Dach installiert. Unter dem Dach unterhalb dieses optischen Körpers sind Absorber angeordnet. Diese sind dem Tages- und Jahresverlauf der Sonne nachführbar, indem sie über eine zweiachsige, lineare Nachführmechanik bewegbar sind.

Mit einer Pressemitteilung in der Frankfurter Allgemeinen Zeitung Beilage Nr. 144 vom 28. Juli 1994 wird über die Verwendung von holographischer Folie zur Einleitung des Sonnenlichts auf Solarzellen berichtet. Die holographische Folie soll herkömmliche Prismen und Linsen ersetzen. Mit der Folie soll eine Aufteilung des Lichtspektrums erreicht werden, um das so aufgeteilte Licht Solarzellen zuzuleiten, die für den jeweiligen Spektralbereich spezifisch ausgebildet sind.

Aus der DE 31 41 789 A1 ist ein Sonnenstrahlkonzentrator bekannt, der einen als Prisma ausgebildeten Körper aufweist, der auf der Eintrittsfläche und auf der Reflexionsfläche jeweils eine Materialschicht mit Hologrammstruktur ausweist. Die Parameter der Hologrammstruktur sind so gewählt, dass die Strahlung mit Hilfe des Hologramms in das Prisma hinein und innerhalb des Prismas so geführt wird, dass sie an mehreren Stirnflächen des Prismas fokussiert austritt. Es erfolgt dabei eine Konzentration der Strahlung und gleichzeitig eine Aufteilung in die verschiedenen Spektralbereiche unter Konzentration der verschiedenen Spektralbereiche auf den verschiedenen Strahlaustrittsflächen. Es sollen so für den jeweiligen Spektralbereich spezifische Fotoumformer beschickt werden können. Dieser aus Prismen bestehende Sonnenstrahlkonzentrator weist die oben beschriebenen Nachteile bei einer Nachführung auf. Ferner treten aufgrund der Prismen Schatteneffekte auf, die die Umsatzrate mindern.

Aus der US 4 054 356 C1 ist ein Sonnenstrahlkonzentrator bekannt, der in Form eines Hologramms einer Lichtpunktquelle ausgeführt ist. Der Brennpunkt der Hologrammlinse erweist sich aber als so gross, dass zur Anordnung eines Empfängers für eine konzentrierte Strahlung im Brennpunkt der Linse eine den Empfänger mit der Linse verbindende Hilfseinrichtung erforderlich wird. Auesserdem ergibt sich eine ungleichmässige Energieverteilung an der Oberfläche des Empfängers.

Aus der DE 30 12 500 A1 ist ein Retroreflektor für den Einsatz in Lichtschranken und Lichtvorhängen bekannt. Der Reflektor verwendet Beugungsgitter, die durch holographische Verfahren in einem photoempfindlichen Material gebildet werden.

Wenn der Reflektor beleuchtet wird, wird die auf ihn auftreffende Strahlung reflektiert und außerhalb der Reflektorplatte mit dem Hologramm fokussiert.

Der Erfindung liegt die Aufgabe zugrunde, eine optische Einrichtung mit einer sonnenfolgenden Folie mit einer Kompensation des sich über mehrere Tage ändernden Sonnenstands, insbesondere mit einer Kompensation des jahreszeitlichen Sonnenstands zu schaffen.

Diese Aufgabe wird mit dem Gegenstand des Patentanspruchs 1 gelöst.

Aufgrund der entlang der Nachführrichtung unterschiedlichen Bereiche der Folie kann auf besonders einfache Weise eine präzise Nachführung realisiert werden.

Die Folie kann hierfür den einzelnen Tagen eines Jahres oder Halbjahres zuordenbare Bereiche aufweisen, vorzugsweise 365 bzw. 182 oder 183 unterschiedliche Bereiche.

Bei grösseren Solaranlagen, die eine Vielzahl von Solarelementen aufweisen, ergibt sich ein besonders einfacher Aufbau, wenn vorgesehen ist, dass mehrere Solarelemente in Längs- und Querreihen in einer Rasteranordnung angeordnet sind, und/oder der optische Körper mehrere separate Bereiche aufweist, die in Längs- und Querreihen in einer Rasteranordnung, vorzugsweise in einer entsprechenden Rasteranordnung wie die Solarelemente, angeordnet sind. Zur Realisierung der Nachführung für eine Kompensation der Veränderung des Standes der Lichtquelle kann vorgesehen sein, dass die Rasteranordnung der Solarelemente und/oder der Bereiche des optischen Körpers um einen spitzen Winkel gegen die Nachführung und/oder Bewegungsrichtung des optischen Körpers gedreht ist. Eine Nachführung mit Kompensation der Veränderung des Sonnenstands über das Jahr kann erreicht werden, wenn ein Winkel von 0,25° gewählt wird.

Soweit an der Folie, vorzugsweise bei dem Durchtritt des Sonnenlichts durch die holographische Folie, eine spektrale Aufteilung des Lichts erfolgt, können spektrenspezifische Solarzellen verwendet werden. Es können mehrere solcher spektrenspezifischer Solarzellen nebeneinander angeordnet werden und die einzelnen Lichtspektren den jeweiligen Solarzellen zugeführt werden.

Bei Verwendung von flexibler Folie sind besonders einfach aufgebaute und dabei zuverlässig und präzise funktionierende Ausführungen der Nachführeinrichtung möglich. Die Nachführeinrichtung kann als Folientransporteinrichtung mit mindestens einer die Folie aufnehmenden und/oder abgebenden Folienspeichereinrichtung, vorzugsweise Trommel, ausgebildet sein. Vorzugsweise ist eine erste Trommel vorgesehen, die die Folie während der Nachwicklung aufwickelt, und eine zweite Trommel, die die Folie während der Nachführung abwickelt. Dabei ist zwischen der ersten und zweiten Trommel ein Folienabschnitt vorzugsweise gespannt angeordnet, der den jeweils wirksamen Abschnitt der Lichtleit- und/oder Lichtkonzentrator-Einrichtung aufweist. Zur Nachführung ist die erste Trommel über einen motorischen Antrieb drehbar angetrieben. Die zweite Trommel läuft synchron mit.

Bei besonderen Ausführungen der Nachführeinrichtung ist eine erste Transporteinrichtung vorgesehen, die den optischen Körper entlang seiner Haupterstreckung bewegt. Zusätzlich kann eine zweite Transporteinrichtung vorgesehen sein, die den optischen Körper winklig, vorzugsweise rechtwinklig, zu seiner Haupterstreckung bewegt oder um eine zu seiner Haupterstreckung parallele Achse drehbar bewegt. Die erste oder die zweite Transporteinrichtung ist abhängig von der Tageszeit gesteuert, d.h. abhängig von dem tageszeitlichen Sonnenstand. Die andere Transporteinrichtung ist abhängig von der Jahreszeit gesteuert, d.h. abhängig vom jahreszeitlichen Sonnenstand.

Der diffraktive und/oder refraktive und/oder holographische Bereiche aufweisende Körper der optischen Einrichtung weist eine vorzugsweise ebene Lichteintrittsfläche und eine ebenfalls vorzugsweise ebene Lichtaustrittsfläche auf. Das Sonnenlicht tritt auf die Lichteintrittsfläche in bestimmtem Einfallwinkel abhängig von der momentanen Position der Lichtquelle relativ zum Empfänger, d.h. in Solaranlagen abhängig vom Sonnenstand. Das so einfallende Licht durchstrahlt den Körper und wird dabei umgelenkt oder konzentriert, so dass das Licht in einem bestimmten Ausfallwinkel bzw. einer bestimmten Konzentration an der Lichtaustrittsfläche aus dem Körper austritt und so dem Empfänger zugeführt wird. Die optischen Parameter des Körpers sind so gewählt, dass der für die jeweilige Anwendung gewünschte Ausfallwinkel bzw. die gewünschte Konzentration erhalten wird. Bei Anwendungen in der Solartechnik werden die optischen Parameter des Körpers so ausgebildet, dass der für eine optimale Nutzung des Sonnenlichts erforderliche Ausfallwinkel aus dem Körper und der entsprechende Einstrahlwinkef auf das Solarelement, möglichst Einstrahlwinkel 90° bzw. dass maximale Konzentration erhalten wird.

Die hinsichtlich der optischen Parameter unterschiedlichen Abschnitte des optischen Körpers können auf oder in dem Körper in Nachführrichtung nebeneinander angeordnet sein, wobei die Abschnitte als kontinuierlich ineinander übergehende Abschnitte oder als separate diskrete Abschnitte ausgebildet sein können. Bei kontinuierlichem Übergang der Abschnitte ergeben sich Vorteile bei der kontinuierlichen Nachführung. Besondere Vorteile diesbezüglich ergeben sich, wenn die Variation der optischen Parameter in Nachführrichtung ebenfalls kontinuierlich mit stetigem Verlauf ausgebildet ist.

Bei bevorzugten Ausführungen weist der optische Körper bzw. die Folie mindestens einen schichtförmigen Bereich mit einer das Licht umleitenden und/oder konzentrierenden Struktur auf. Der optische Körper kann mit holographischen Elementen versehen sein, z.B. kann der Körper einen vorzugsweise schichtförmigen Bereich aufweisen, der Hologrammstruktur aufweist. Die hinsichtlich der optischen Parameter unterschiedlichen Abschnitte können dadurch realisiert sein, dass die Abschnitte unterschiedliche Hologrammstruktur aufweisen. Anstelle oder zusätzlich zur Hologrammstruktur kann der optische Körper eine Struktur einer diffraktiven Linse oder eines diffraktiven Spiegels aufweisen, um das Licht im wesentlichen zu konzentrieren.

Um Reflexionsverluste an dem optischen Körper bzw. der Folie zu minimieren, kann der optische Körper bzw. die Folie auf der der Lichtquelle zugewandten Seite entspiegelt sein.

Der Körper kann als starrer oder flexibler Körper ausgebildet sein. Besondere Vorteile ergeben sich bei der Verwendung einer holographischen Folie. Die Folie kann auch als Konzentratorfolie mit Struktur einer diffraktiven Linse oder eines diffraktiven Spiegels ausgebildet sein. Die Folie kann mehrere in Nachführrichtung hintereinander angeordnete Bereiche unterschiedlicher Linsenstruktur oder unterschiedlicher Spiegelstruktur aufweisen.

Weitere Einzelheiten, Merkmale und Vorteile ergeben sich aus der nachfolgenden Beschreibung mehrerer in der Zeichnung schematisch dargestellter Ausführungsbeispiele.

Es zeigen:
- Figur 1: eine schematische Darstellung einer Solaranlage;
- Figur 2: eine vereinfachte, stilisierte Darstellung der Solaranlage in Figur 1 bei Sonnenstand am Vormittag;
- Figur 3: eine vereinfachte, stilisierte Darstellung der Solaranlage in Figur 1 bei Sonnenstand am Mittag;
- Figur 4: eine vereinfachte, stilisierte Darstellung der Solaranlage in Figur 1 bei Sonnenstand am Nachmittag;
- Figur 5: eine vereinfachte, stilisierte Darstellung einer Solaranlage mit einer als Konzentrator ausgebildeten Folie mit diffraktiver Linse, bei Sonnenstand am Mittag;
- Figur 6: eine vereinfachte, stilisierte Darstellung der Solaranlage in Figur 5 bei Sonnenstand am Nachmittag;
- Figur 7: eine vereinfachte, stilisierte Darstellung einer Solaranlage mit mehreren Solarelementen;
- Figur 8: eine Folie mit Linsen in Rasteranordnung;
- Figur 9: eine vereinfachte, stilisierte Darstellung einer Solaranlage bei Einsatz der Folie in Figur 8;
- Figur 10: eine vereinfachte, stilisierte Darstellung einer Solaranlage mit einer als Konzentrator ausgebildeten Folie mit diffraktivem Hohlspiegel.

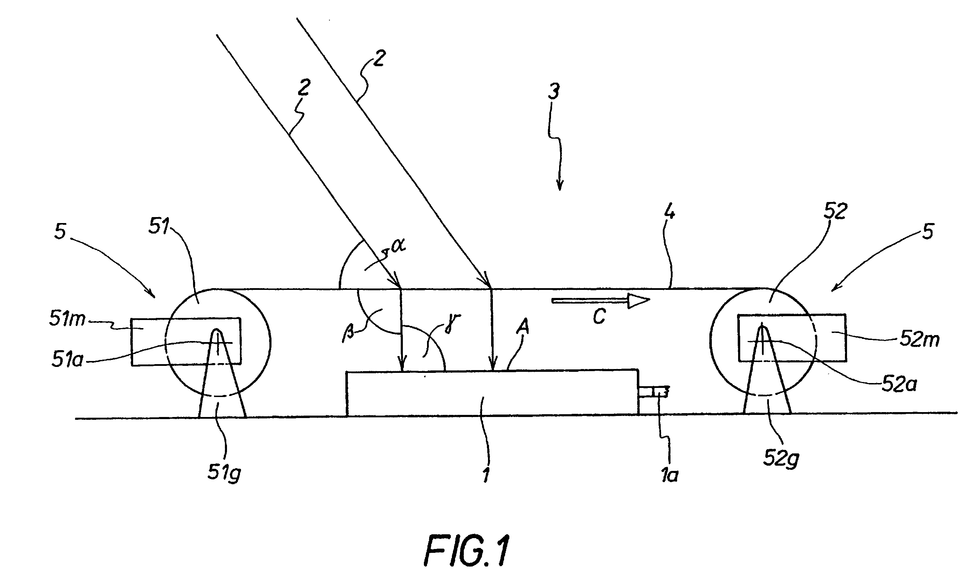

Die Solaranlage in Figur 1 weist ein Solarelement 1 auf. Bei dem Solarelement 1 kann es sich um ein einzelnes oder auch um eine Batterie von nebeneinander angeordneten Solarelementen handeln. Das Solarelement 1 kann als fotovoltaische Solarzelle oder wärmeerzeugender Sonnenkollektor ausgebildet sein. Das auf das Solarelement 1 eingestrahlte Sonnenlicht 2 wird durch das Solarelement 1 in elektrische bzw. thermische Energie umgewandelt. Diese wird am Ausgang 1a der Solarelements in ein nicht dargestelltes Netz oder einen Energiespeicher eingespeist.

Dem Solarelement 1 ist eine optische Einrichtung 3 zugeordnet, die das abhängig vom Sonnenstand im Winkel Ó einfallende Sonnenlicht 2 jeweils möglichst senkrecht auf die Oberfläche des Solarelements 1 leitet, um das Sonnenlicht möglichst effizient zu nutzen.

Die optische Einrichtung 3 weist einen diffraktiv und/oder refraktiv wirkenden optischen Körper 4 auf, der von dem Sonnenlicht durchstrahlt wird und dabei das Sonnenlicht umlenkt. Bei dem dargestellten Ausführungsbeispiel ist der optische Körper 4 als durchsichtige holographische Folie ausgebildet, die mit Abstand über der Oberfläche des Solarelements 1 gespannt ist.

Die Hologrammstruktur des über dem Solarelement angeordneten durchstrahlten Abschnitts der Folie 4 ist so ausgebildet, dass das in dem Winkel Ó auf die Oberfläche der Folie 4 einfallende Sonnenlicht beim Durchtritt durch die Folie umgeleitet wird und unter einem Winkel β an der Unterseite der Folie austritt. Die Anordnung des Solarelements 1 ist so gewählt, dass das unter Winkel β austretende Sonnenlicht mit Winkel von vorzugsweise 90° auf die Oberfläche A des Solarelements 1 gerichtet ist. Bei dem dargestellten Ausführungsbeipiel ist der Austrittwinkel β = 90°, und die Folie ist in einer zur Oberfläche A des Solarelements 1 parallelen Ebene gespannt.

Um eine bei jedem Sonnenstand effiziente Nutzung des Sonnenlichts zu erhalten, weist die optische Einrichtung 3 eine Nachführeinrichtung 5 auf, mit der die Folie 4 relativ zu dem ortsfest angeordneten Solarelement 1 dem Sonnenstand nachgeführt wird. Die Nachführeinrichtung 5 weist zwei synchron angetriebene Trommeln 51, 52 auf. Die Trommeln 51, 52 sind mit gegenseitigem Abstand parallel zueinander angeordnet. Sie sind jeweils in ortsfest angeordneten Lagerböcken 51g, 52g drehbar gelagert. Zwischen den Trommeln 51, 52 ist die Folie 4 gespannt, wobei die beiden gegenüberliegenden Enden der Folie 4 auf den Trommeln 51, 52 aufgewickelt sind. Die Trommeln 51, 52 sind motorisch so gesteuert angetrieben, dass sie sich synchron um ihre Trommelachse 51a, 52a drehen. Die Drehrichtung in Figur 1 ist im Uhrzeigersinn, so dass die zwischen den Trommeln 51, 52 gespannte Folie 4 in Richtung C von links nach rechts transportiert wird. Die Transportgeschwindigkeit ist abhängig vom tageszeitlichen Verlauf des Sonnenstands gesteuert.

Während dieses Nachführvorgangs läuft die Folie 4 kontinuierlich in Richtung C. Dabei wird die Folie auf die Trommel 52 aufgewickelt und von der Trommel 51 abgewickelt. Nur jeweils der im gespannten Abschnitt über dem Solarelement 1 momentan vorliegende Folienabschnitt wird von dem einfallenden Sonnenlicht durchstrahlt und nur dieser Abschnitt ist momentan gerade wirksam.

Die Folie 4 weist entlang ihrer Haupterstreckung, d.h. in Flächenrichtung und damit in Nachführrichtung C eine variierende Hologrammstruktur auf. Die Variation der Parameter der Hologrammstruktur ist so gewählt, dass bei einer bestimmten vorgegebenen Transport- bzw. Nachführgeschwindigkeit eine kontinuierliche Anpassung der Lichtumlenkung an den vom Sonnenstand abhängigen Einfallwinkel Ó erhalten wird. Die Anpassung der Hologrammstruktur ist so ausgestaltet, dass der Ausfallwinkel β bei dem vom Sonnenstand abhängigen Einfallwinkel Ó über den Tag hin annähernd konstant ist. Dies bedeutet, dass über den Tag bei jedem Sonnenstand die Winkel β und annähernd konstant sind und somit bei jedem Sonnenstand das Sonnenlicht gleichermassen effizient genutzt wird.

Um eine jahreszeitliche Anpassung zu erhalten, ist zusätzlich eine Nachführung der Winkelstellung der Folienebene gegenüber der Oberfläche A des Solarelements 1 vorgesehen. Die Folienebene wird hierbei um eine in Richtung C parallel zur Oberfläche des Solarelements angeordnete Schwenkachse vorzugsweise mitsamt den Trommeln 51, 52 geschwenkt. Hierbei ist vorgesehen, dass die Trommeln 51, 52 über einen nicht dargestellten z.B. im Bereich der Lagerböcke 51g, 52g angeordneten Schwenkmechanismus entsprechend winkelig nachgeführt werden.

Der rotatorische Antrieb der Trommeln 51, 52 zu der oben beschriebenen tageszeitlichen Nachführung der Folie in Richtung C erfolgt über separate Antriebsmotoren 51m, 52m. Der Antriebsmotor 51m treibt die Trommelwelle 51a an. Hierzu ist die nicht dargestellte Abtriebswelle des Antriebsmotors 51m über ein nicht dargestelltes Getriebe mit der Trommelwelle 51a gekuppelt. In entsprechender Weise treibt der Antriebsmotor 52m die Trommelwelle 52a an. Die beiden Motoren 51m, 52m sind synchron gesteuert. Die Steuerung ist so ausgestaltet, dass die Transportgeschwindigkeit, d.h. die Nachführung der Folie 4 in Richtung C abhängig vom Verlauf des tageszeitlichen Sonnenstandes erfolgt.

In der Nacht wird die Folie zurückgestellt. Dies geschieht dadurch, dass die Antriebsmotoren in Gegenrichtung zurücklaufen und die Folie von der Trommel 52 abgewickelt und auf die Trommel 51 aufgewickelt wird.

Die zur jahreszeitlichen Nachführung erforderliche Schwenkbewegung der Trommeln 51, 52 kann ebenfalls motorisch über einen nicht dargestellten Antriebsmotor, der den oben erläuterten Schwenkmechanismus entsprechend gesteuert betätigt, erfolgen.

Während bei dem beschriebenen Ausführungsbeispiel vom Vorhandensein einer sich im wesentlichen kontinuierlich verändernden, das Licht umleitenden Hologrammstruktur auf der Folie bzw. dem transparenten optischen Körper und dementsprechend von einer kontinuierlichen Bewegung der Folie über das Solarelement ausgegangen wurde, ist es selbstverständlich auch denkbar, den optischen Körper quasi diskontinuierlich mit einer entsprechenden, das Licht umlenkenden Struktur, z. B. in Form von Streifen gleicher Struktur, zu versehen, in welchem Fall dann der optische Körper entsprechend diskontinuierlich bzw. schrittweise gegenüber dem Solarelement bewegt werden müsste.

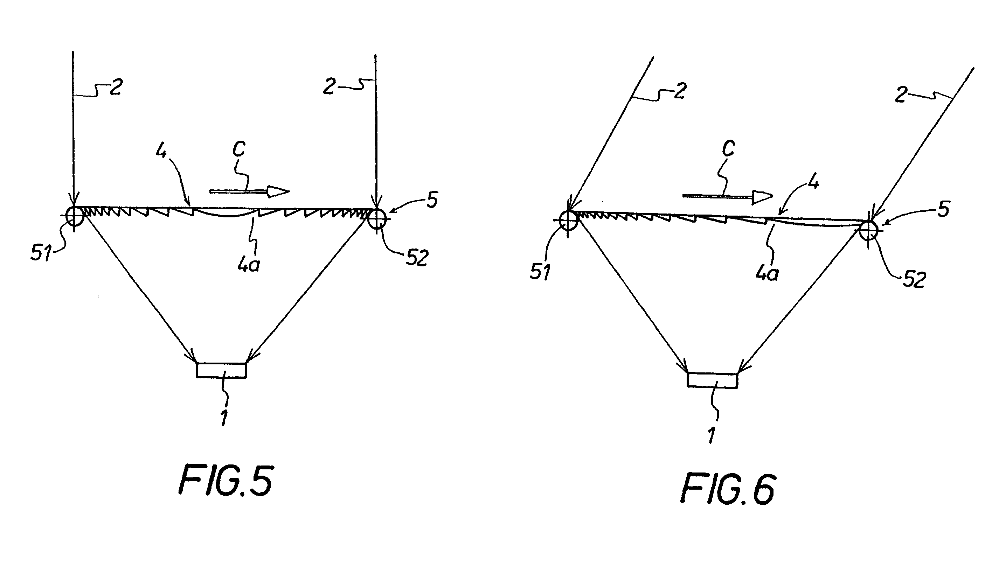

Bei dem Ausführungsbeispiel in den Figuren 5 und 6 handelt es sich ebenfalls um eine Solaranlage mit einer über einem Solarelement 1 geführten diffraktiven Folie 4, die durch Auf- und Abwickeln über eine Nachführeinrichtung 5 mit lediglich schematisch angedeuteten, tatsächlich wesentlich grösseren und in entsprechendem Abstand voneinander angebrachten Trommeln 51, 52 dem tageszeitlichen Sonnenstand nachgeführt wird. Im Unterschied zu den vorangehenden Ausführungsbeispielen ist die in den Figuren 5 und 6 eingesetzte Folie 4 eine das einfallende Sonnenlicht konzentrierende Folie. Es handelt sich um einen Folienkonzentrator in Form einer diffraktiven Linse 4a. Das einfallende Sonnenlicht wird beim Durchtritt durch die Linse 4a konzentriert, so dass das Bild der Sonne in dem im Brennpunkt angeordneten Solarelement 1 erscheint. Der Abstand von Folie 4 zur Oberfläche A des Solarelements liegt bei Verwendung einer Folie mit Linsendurchmesser von 1 bis 5 cm bei 10 bis 20 cm.

Die über dem Solarelement 1 gespannte Folie 4 wird während des Tages durch die Nachführeinrichtung 5 in den Figuren von links nach rechts verschoben, d.h. entlang Ost-West-Richtung. Dadurch wird das Bild der über den Verlauf des Tages abhängig vom tageszeitlichen Sonnenstand mehr oder weniger schräg einstrahlenden Sonne nachgeführt, so dass während des ganzen Tages das Bild der Sonne auf das in konstanter Position angeordnete Solarelement 1 fällt. Figur 5 zeigt die Stellung bei ungefähr senkrecht einfallendem Sonnenlicht zur Mittagszeit. Figur 6 zeigt die Stellung bei schräg einfallendem Sonnenlicht am Nachmittag. Wie in Figur 6 zu erkennen ist, ist in dieser Stellung die Folie 4 bzw. die Linse 4a durch Verschiebung nach rechts nachgeführt.

Die Transportgeschwindigkeit der Folie 4 zwecks tageszeitlicher Nachführung beträgt f x 0,25 pro Stunde, wobei "f" die Brennweite der Linse ist. Damit wird die aufgrund des tageszeitlichen Verlaufs des Sonnenstands auftretende Änderung des Einstrahlwinkels, die bei ca. 15° pro Stunde liegt, berücksichtigt und eine exakte tageszeitliche Nachführung erhalten.

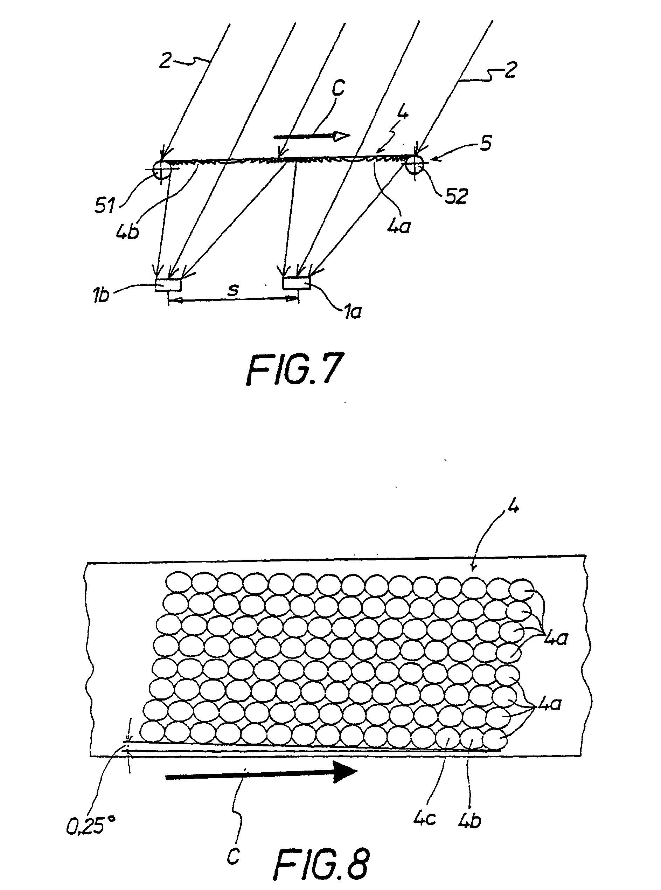

Bei abgewandelten Ausführungsbeispielen sind mehrere Solarelemente 1a, 1b in Bewegungsrichtung der Folie 4 hintereinander angeordnet. Figur 7 zeigt eine solche Anordnung von zwei Solarelementen 1a, 1b. Die über die Solarelemente 1a, 1b gespannte Folie 4 weist zwei in Bewegungsrichtung C der Folie hintereinander angeordnete Linsen 4a, 4b auf. Wie in Figur 7 zu erkennen ist, ist die Linse 4a dem Solarelement 1a und die Linse 4b dem Solarelement 1b zugeordnet, indem die Linse 4a das Solarelement 1a und die Linse 4b das Solarlelement 1b beleuchtet. Hierfür ist der Abstand s der Solarelemente 1a, 1b gleich dem Abstand der Mittelachsen der Linsen 4a, 4b. Durch die tageszeitliche Nachführbewegung der Folie 4 wird das Bild der Sonne mit dem tageszeitlichen Sonnenstand nachgeführt, so dass das Bild der Sonne jeweils durch die Linse 4a in konstanter Position auf das Solarelement 1a und durch die Linse 4b jeweils in konstanter Position auf das Solarelement 1b fällt.

Bei den Ausführungsbeispielen der Figuren 5, 6 und 7 können mehrere Solarelemente 1a, 1b usw. jeweils in einer oder mehreren Reihen quer zur Bewegungsrichtung der Folie 4 nebeneinander angeordnet sein. Im Falle der Verwendung von Folien mit ringförmigen Linsen sind hierfür auf der Folie mehrere Linsen 4a, 4b usw. in Querrichtung angeordnet. Die Linsen und die zugeordneten Solarelemente einer Querreihe sind jeweils so angeordnet, dass der Abstand der Mittelachsen benachbarter Linsen gleich dem Abstand der zugeordneten benachbarten Solarelemente ist. Dadurch wird jedem Solarelement einer Querreihe je eine Linse einer Querreihe zugeordnet. Dabei wird durch die tageszeitliche Nachführung der Folie 4 sichergestellt, dass jedes Solarelement jeweils permanent während des Tages über die ihr zugeordnete Linse beleuchtet wird.

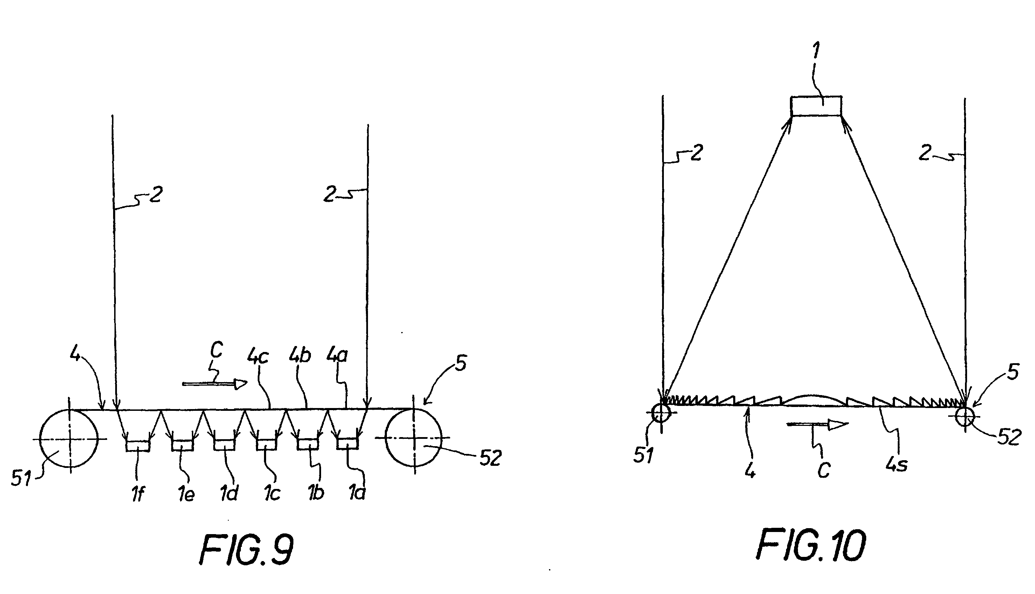

Figur 8 zeigt einen Folienabschnitt mit in Rasteranordnung auf der Folie angeordneten Linsen 4a, 4b, 4c. Die Linsen sind in zueinander rechtwinklig verlaufenden Längs- und Querreihen nebeneinander angeordnet. Dabei ist diese Rasteranordnung um den Winkel von ca. 0,25° gegen die Bewegungs- und Erstreckungsrichtung C der Folie 4 gedreht. Der Winkel von 0,25° entspricht der täglichen Änderung der Neigung der Sonne gegen das Solarpaneel; diese Winkeländerung ist 47°/182 pro Tag. Auf diese Weise kann die tägliche Neigungsänderung der Sonne lediglich durch Verschiebung der Folie in Richtung C, d.h. ohne zusätzliche Verstellung, ausgeglichen werden.

In Figur 9 ist der Einsatz dieser Folie 4 in einer Solaranlage dargestellt. Die Folie ist über den in Rasteranordnung angeordneten Solarelementen 1a bis 1f gespannt und wird in Richtung C, entlang Ost-West-Richtung, auf- und abgewickelt. Die tageszeitliche Nachführung erfolgt dabei wie bei den vorangehenden Ausführungsbeispielen durch Verschiebung der Folie während des Tages, in Figur 9 von links nach rechts. Hierbei bleibt über den gesamten Tag jeweils immer eine Linse einem bestimmten Solarelement zugeordnet, so dass das Solarelement jeweils durch diese Linse beleuchtet wird. Zur jahreszeitlichen Nachführung wird die Folie jeden Tag um einen Linsenabstand verschoben, so dass also jedes Solarelement nur einen Tag von einer Linse beleuchtet wird. Am Folgetag erfolgt die Beleuchtung des Solarelements durch die folgende Linse. Die Nachführung erfolgt bei der Bewegung der Folie in Richtung C zwangsweise aufgrund der um den Winkel von 0,25° gedrehten Rasteranordnung. Denn durch die derart gedrehte Rasteranordnung wird mit der täglichen Änderung der jahreszeitlichen Sonnenstandshöhe über dem Horizont ein relativer Versatz der Linsen senkrecht zur Ausbreitungsrichtung erzielt und damit die jahreszeitliche Sonnenstandsänderung ausgeglichen.

Dies bedeutet, dass bei dem Ausführungsbeispiel in Figur 9 durch die Nachführbewegung der Folie 4 in Richtung C die tageszeitliche und ebenfalls die jahreszeitliche Nachführung erfolgt. Die Folie 4 kann hierfür 182 unterschiedliche, in Bewegungsrichtung aufeinanderfolgend angeordnete Linsen aufweisen und wird innerhalb eines Jahres über die Nachführeinrichtung 5 einmal komplett hin und zurück bewegt, d.h. im ersten Halbjahr in Figur 9 nach rechts und im zweiten Halbjahr nach links.

Bei abgewandelten Ausführungsbeispielen, die im Unterschied zur Figur 8 und 9 keine um einen Winkel gedrehte Rasteranordnung aufweisen, kann die jahreszeitliche Nachführung auch durch Schwenken der Folienebene um die Bewegungsachse der Schiebebewegung erfolgen oder durch Verschieben der Folie in einer gegenüber der Horizontalen geneigten, der Sonne zugewandten Ebene. Bei Anordnung des Solarelements auf der der Sonne zugewandten Dachschräge eines Hauses erfolgt die jahreszeitliche Nachführung somit durch Verschieben der Folie parallel zur Dachschräge nach oben oder unten.

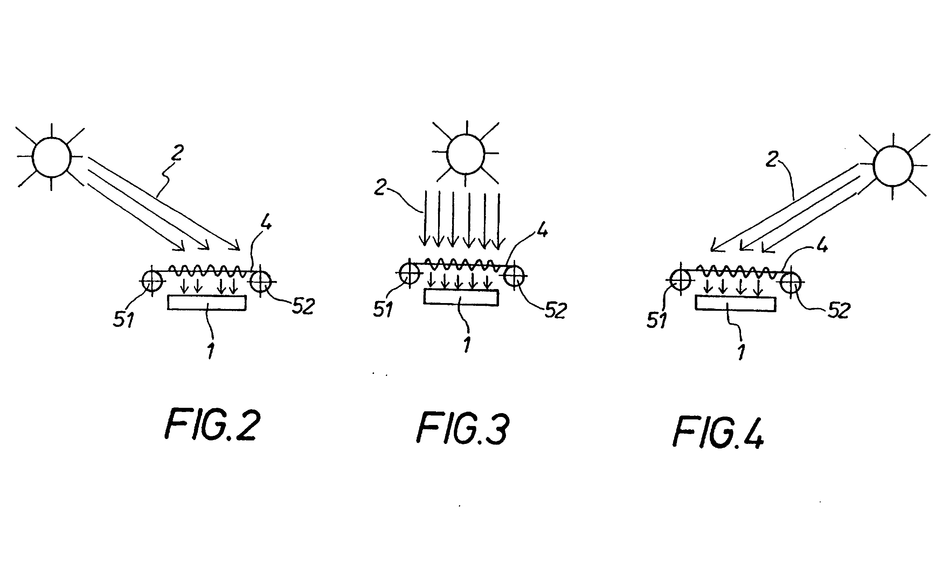

Bei einem in Figur 10 dargestellten abgewandelten Ausführungsbeispiel weist die Folie 4 anstelle der diffraktiven Linse einen diffraktiven Spiegel, Hohlspiegel 4s, auf. Das Solarelement 1 ist auf der zur Sonne gewandten Seite der Folie 4 mit Abstand f (= Brennweite) zur Folie 4 angeordnet. Das auf den Spiegel 4s auftreffende Sonnenlicht wird konzentriert, so dass das Bild der Sonne auf die Oberfläche A des Solarelements fällt. In entsprechender Weise wie bei den vorangehenden Ausführungsbeispielen erfolgt über eine Nachführeinrichtung 5 die Nachführung der Folie durch Verschiebung der Folie in Richtung C. Die Spiegelfolie kann auch mehrere Spiegel 4s in Längs- und Querreihen angeordnet aufweisen. Die Folie kann insoweit entsprechend aufgebaut sein wie die in Verbindung mit den Ausführungsbeispielen der Figuren 5 bis 9 beschriebenen Folien mit Linsenstruktur. Mit den Spiegelfolien sind zu den Figuren 4 bis 9 analoge Ausführungsformen möglich.

Das Höhenprofil der in den beschriebenen Ausführungsbeispielen verwendeten diffraktiven Linsen und Spiegel besteht aus konzentrischen Zonen mit sphärischen und paraboloiden Querschnitten. Anstelle oder zusätzlich zu diesen konzentrischen Strukturen können die Folien 4 auch Querstrukturen aufweisen. Die Folien können gleichzeitig Licht konzentrierend und umlenkend wirken.

## Patentansprüche

1. Diffraktiv und/oder refraktiv arbeitende optische Einrichtung mit einem mindestens ein Solarelement aufweisenden Empfänger, um einfallendes Licht, vorzugsweise Sonnenlicht, auf das Solarelement zu leiten, mit einer abhängig vom zeitlichen Verlauf des Relativstands von Lichtquelle und Empfänger vorzugsweise abhängig vom Sonnenstand gesteuerten Nachführeinrichtung, wobei vorgesehen ist,
daß die optische Einrichtung (3) einen diffraktive und/oder refraktive und/oder holographische, das Licht umlenkende und/oder konzentrierende Bereiche aufweisenden, transparenten oder spiegelnden optischen Körper (4) aufweist, und
daß der optische Körper als eine Folie (4) und/oder an einer Folie (4) ausgebildet ist, die hinsichtlich ein oder mehrerer ihrer optischen Parameter entlang der Nachführrichtung unterschiedlich ausgebildete Abschnitte aufweist und über die Nachführeinrichtung (5) unter Relativbewegung zum Solarelement (1) durch Auf- und Abrollen der Folie (4) nachführbar ist, wobei durch das Auf- und Abrollen der Folie (4) und der Relativbewegung von Folie (4) und Solarelement (1) die unterschiedlichen Abschnitte des optischen Körpers (4) in und außer Wirkstellung bringbar sind,
**dadurch gekennzeichnet,**
**daß** die Folie (4) mit dem Solarelement (1) derart zusammenwirkt, daß Licht auf das Solarelement (1) geleitet wird, und daß die entlang der Nachführrichtung unterschiedlich ausgebildeten Bereiche der Folie mindestens einem Solarelement (1) zugeordnet und derart unterschiedlich ausgebildet sind, daß ein erster der Bereiche für einen ersten Zeitraum von ein oder mehreren Tagen mit dem Solarelement (1) zusammenwirkt und ein dem ersten Bereich benachbarter zweiter Bereich für einen nachfolgenden zweiten Zeitraum von einem oder mehreren Tagen mit diesem Solarelement (1) zusammenwirkt.

2. Einrichtung nach Anspruch 1,
**dadurch gekennzeichnet,**
**daß** die Folie (4) den einzelnen Tagen eines Jahres oder Halbjahres zuordenbare unterschiedliche Bereiche aufweist, vorzugsweise 365 bzw. 182 oder 183 unterschiedliche Bereiche.

3. Einrichtung nach Anspruch 1 oder 2,
**dadurch gekennzeichnet,**
**daß** mehrere Solarelemente (1a, 1b, 1c) in Längs- und in Querreihen in einer Rasteranordnung angeordnet sind und/oder der optische Körper mehrere separate Bereiche (4a, 4b, 4c) aufweist, die in Längs- und Querreihen in einer Rasteranordnung, vorzugsweise in entsprechender Rasteranordnung wie die Solarelemente, angeordnet sind.

4. Einrichtung nach Anspruch 3,
**dadurch gekennzeichnet,**
**daß** die Rasteranordnung der Solarelemente (1a, 1b, 1c) und/oder der Bereiche (4a, 4b, 4c) des optischen Körpers um einen spitzen Winkel gegen die Nachführrichtung und/oder die Bewegungsrichtung des optischen Körpers (4) gedreht ist, vorzugsweise um einen Winkel von 0,25°, zur Kompensation der Veränderung des Sonnenstands über das Jahr.

5. Einrichtung nach einem der vorhergehenden Ansprüche,
**dadurch gekennzeichnet,**
**dass** die Nachführeinrichtung (5) eine erste, vorzugsweise motorische Transporteinrichtung aufweist, die den optischen Körper (4) in eine erste Nachführrichtung, vorzugsweise entlang seiner Haupterstreckung, vorzugsweise linear bewegt.

6. Einrichtung nach einem der vorhergehenden Ansprüche,
**dadurch gekennzeichnet,**
**dass** die Nachführeinrichtung (5) eine zweite, vorzugsweise motorische Transporteinrichtung aufweist, die den optischen Körper (4) in einer zweiten Nachführrichtung winkelig zu seiner Haupterstreckung, vorzugsweise linear und/oder um eine zu der Haupterstreckung des optischen Körpers (4) parallele Achse rotatorisch bewegt.

7. Einrichtung nach Anspruch 5 oder 6,
**dadurch gekennzeichnet,**
**dass** die erste und/oder die zweite Transporteinrichtung abhängig von der Tageszeit gesteuert ist.

8. Einrichtung nach Anspruch 6 oder 7,
**dadurch gekennzeichnet,**
**dass** die erste oder die zweite Transporteinrichtung abhängig von der Jahreszeit gesteuert ist.

9. Einrichtung nach einem der Ansprüche 5 bis 8,
**dadurch gekennzeichnet,**
**dass** der optische Körper (4) als flexible Folie ausgebildet ist und die Transporteinrichtung als Folientransporteinrichtung mit mindestens einer die Folie aufnehmenden und/oder abgebenden Folienspeichereinrichtung, vorzugsweise Trommel (51, 52) ausgebildet ist.

10. Einrichtung nach Anspruch 9,
**dadurch gekennzeichnet,**
**dass** eine erste Trommel (52) vorgesehen ist, die die Folie (4) während der Nachführung aufwickelt, und dass eine zweite Trommel (51) vorgesehen ist, die die Folie während der Nachführung abwickelt, und dass zwischen der ersten und der zweiten Trommel ein Folienabschnitt vorzugsweise gespannt über dem Solarelement (1) angeordnet ist, der den bei dieser Stellung der Folie (4) wirksamen Abschnitt aufweist.

11. Einrichtung nach einem der vorangehenden Ansprüche,
**dadurch gekennzeichnet,**
**dass** die unterschiedlichen Abschnitte auf und/oder in dem optischen Körper (4) in Nachführrichtung nebeneinander angeordnet sind, wobei die Abschnitte als kontinuierlich ineinander übergehende Abschnitte oder als separate diskrete Abschnitte ausgebildet sind.

12. Einrichtung nach einem der vorangehenden Ansprüche,
**dadurch gekennzeichnet,**
**dass** der optische Körper (4) als starrer oder flexibler Körper ausgebildet ist.

13. Einrichtung nach einem der vorhergehenden Ansprüche,
**dadurch gekennzeichnet,**
**dass** der optische Körper (4) bzw die Folie (4) mindestens einen schichtförmigen Bereich mit einer das Licht umlenkenden und/oder konzentrierenden Struktur aufweist.

14. Einrichtung nach einem der vohergehenden Ansprüche,
**dadurch gekennzeichnet,**
**dass** die Folie (4) auf der der Lichtquelle zugewandten Seite entspiegelt ist.

15. Einrichtung nach einem der vorhergehenden Ansprüche,
**dadurch gekennzeichnet,**
**dass** die Licht konzentrierende Struktur als Konzentrierfolie (4) ausgebildet ist, die die Struktur einer diffraktiven Linse (4a) oder eines diffraktiven Spiegels aufweist.

16. Einrichtung nach Anspruch 15,
**dadurch gekennzeichnet,**
**dass** die Folie mehrere in Nachführrichtung hintereinander angeordnete unterschiedliche Linsenstrukturbereiche oder Spiegelstrukturbereiche aufweist.

## Claims

1. Diffractively and/or refractively operating optical device with a receiver having at least one solar element, to direct incident light, preferably sunlight, onto the solar element, with a tracking device controlled on the basis of the change over time of the relative position of the light source and receiver, preferably on the basis of the position of the sun, it being provided that the optical device (3) has a diffractive and/or refractive and/or holographic, transparent or reflective optical body (4), having regions which deflect and/or concentrate the light, and in that the optical body is formed as a film (4) and/or is formed on a film (4) which has portions which are formed differently with regard to one or more of its optical parameters along the tracking direction and can be made to track by means of the tracking device (5) with relative movement in relation to the solar element (1) by rolling up and unrolling of the film (4), the rolling up and unrolling of the film (4) and the relative movement of the film (4) and solar element (1) allowing the different portions of the optical body (4) to be brought into and out of the effective position, **characterized in that** the film (4) interacts with the solar element (1) in such a way that light is directed onto the solar element (1), and **in that** the regions of the film formed differently along the tracking direction are assigned to at least one solar element (1) and are differently formed in such a way that a first one of the regions interacts with the solar element (1) for a first time period of one or more days and a second region, alongside the first region, interacts with this solar element (1) for a subsequent second time period of one or more days.

2. Device according to Claim 1, **characterized in that** the film (4) has different regions which can be assigned to the individual days of a year or half-year, preferably 365 or 182 or 183 different regions.

3. Device according to Claim 1 or 2, **characterized in that** a plurality of solar elements (1a, 1b, 1c) are arranged in longitudinal and transverse rows in a grid arrangement and/or the optical body has a plurality of separate regions (4a, 4b, 4c) which are arranged in longitudinal and transverse rows in a grid arrangement, preferably in a grid arrangement corresponding to the solar elements.

4. Device according to Claim 3, **characterized in that** the grid arrangement of the solar elements (1a, 1b, 1c) and/or of the regions (4a, 4b, 4c) of the optical body is turned by an acute angle with respect to the tracking direction and/or the direction of movement of the optical body (4), preferably by an angle of 0.25°, to compensate for the change in the position of the sun over the year.

5. Device according to one of the preceding claims, **characterized in that** the tracking device (5) has a first, preferably motorized, transporting device. which moves the optical body (4) in a first tracking direction, preferably along its principal extent, preferably linearly.

6. Device according to one of the preceding claims, **characterized in that** the tracking device (5) has a second, preferably motorized, transporting device, which moves the optical body (4) in a second tracking direction at an angle to its principal extent, preferably linearly, and/or rotationally about an axis parallel to the principal extent of the optical body (4).

7. Device according co Claim 5 or 6, **characterized in that** the first and/or the second transporting device is controlled on the basis of the time of day.

8. Device according to Claim 6 or 7, **characterized in that** the first and/or the second transporting device is controlled on the basis of the time of year.

9. Device according to one of Claims 5 to 8, **characterized in that** the optical body (4) is formed as a flexible film and the transporting device is formed as a film-transporting device with at least one film-storing device, preferably a reel (51, 52), which takes up and/or gives out the film.

10. Device according to Claim 9, **characterized in that** a first reel (52) is provided, which winds up the film (4) during the tracking, and **in that** a second reel (51) is provided, which unwinds the film during the tracking, and **in that** between the first reel and the second reel a portion of film, which has the portion that is effective in this position of the film (4), is arranged, preferably under tension, over the solar element (1).

11. Device according to one of the preceding claims, **characterized in that** the different portions are arranged on and/or in the optical body (4) next to one another in the tracking direction, the portions being formed as portions merging continuously with one another or as separate, discrete portions.

12. Device according to one of the preceding claims, **characterized in that** the optical body (4) is formed as a rigid or flexible body.

13. Device according to one of the preceding claims, **characterized in that** the optical body (4) or the film (4) has at least one region in the form of a layer with a structure deflecting and/or concentrating the light.

14. Device according to one of the preceding claims, **characterized in that** the film (4) is provided with an antireflection coating on the side facing the light source.

15. Device according to one of the preceding claims, **characterized in that** the light-concentrating structure is formed as a concentrating film (4), which has the structure of a diffractive lens (4a) or of a diffractive reflector.

16. Device according to Claim 15, **characterized in that** the film has a plurality of different lens structure regions or reflector structure regions arranged one behind the other in the tracking direction.

## Revendications

1. Dispositif optique fonctionnant de manière diffractive et/ou réfractive, avec un récepteur présentant au moins un élément solaire pour guider la lumière incidente, de préférence la lumière du soleil, sur l'élément solaire, avec un dispositif de poursuite commandé en fonction de la variation dans le temps de la position relative entre source de lumière et récepteur, de préférence en fonction de la position du soleil, étant prévu que le dispositif optique (3) présente un corps optique (4) transparent ou réfléchissant, présentant des zones diffractives et/ou réfractives et/ou holographiques, déviant et/ou concentrant la lumière, et que le corps optique est conçu comme un film (4) et/ou contre un film (4) qui présente, en ce qui concerne un ou plusieurs de ses paramètres optiques, des sections formées différemment le long de la direction de poursuite et peut être poursuivi par l'intermédiaire du dispositif de poursuite (5) avec un déplacement relatif par rapport à l'élément solaire (1) par enroulement et déroulement du film (4), les différentes sections du corps optique (4) pouvant être amenées dans une position active ou hors de cette position active par l'enroulement et le déroulement du film (4) et le mouvement relatif entre film (4) et élément solaire (1), **caractérisé en ce que** le film (4) coopère avec l'élément solaire (1) de façon que de la lumière soit guidée sur l'élément solaire (1) et que les zones du film formées différemment le long de la direction de poursuite soient associées à au moins un élément solaire (1) et formées différemment de manière à ce qu'une première des zones coopère avec l'élément solaire (1) pour une première période d'un ou plusieurs jours et une deuxième zone voisine de la première zone coopère avec cet élément solaire (1) pour une deuxième période suivante d'un ou plusieurs jours.

2. Dispositif selon la revendication 1, **caractérisé en ce que** le film (4) présente des zones différentes pouvant être associées aux différents jours d'une année ou d'un semestre, de préférence 365, respectivement 182 ou 183 zones différentes.

3. Dispositif selon la revendication 1 ou 2, **caractérisé en ce que** plusieurs éléments solaires (1a, 1b, 1c) sont disposés en rangées longitudinales et transversales dans un agencement en quadrillage et/ou le corps optique présente plusieurs zones séparées (4a, 4b, 4c) qui sont disposées en rangées longitudinales et transversales dans un agencement en quadrillage, de préférence dans un agencement en quadrillage correspondant aux éléments solaires.

4. Dispositif selon la revendication 3, **caractérisé en ce que** l'agencement en quadrillage des éléments solaires (1a, 1b, 1c) et/ou des zones (4a, 4b, 4c) du corps optique est tourné d'un angle aigu par rapport à la direction de poursuite et/ou la direction de mouvement du corps optique (4), de préférence d'un angle de 0,25° pour compenser la variation de position du soleil sur l'année.

5. Dispositif selon l'une quelconque des revendications précédentes, **caractérisé en ce que** le dispositif de poursuite (5) présente un premier dispositif de transport, de préférence à moteur, qui déplace le corps optique (4) dans une première direction de poursuite, de préférence le long de son étendue principale, de préférence linéairement.

6. Dispositif selon l'une des revendications précédentes, **caractérisé en ce que** le dispositif de poursuite (5) présente un deuxième dispositif de transport, de préférence à moteur, qui déplace le corps optique (4) dans une deuxième direction de poursuite formant un angle par rapport à son étendue principale, de préférence linéairement et/ou en rotation autour d'un axe parallèle à l'étendue principale du corps optique (4).

7. Dispositif selon la revendication 5 ou 6, **caractérisé en ce que** le premier et/ou le deuxième dispositif(s) de transport est (sont) commandé(s) en fonction de l'heure du jour.

8. Dispositif selon la revendication 6 ou 7, **caractérisé en ce que** le premier ou le deuxième dispositif de transport est commandé en fonction de la période de l'année.

9. Dispositif selon l'une des revendications 5 à 8, **caractérisé en ce que** le corps optique (4) est conçu comme un film souple et le dispositif de transport est conçu comme dispositif de transport de film avec au moins un dispositif de stockage de film recevant et/ou délivrant le film, de préférence un tambour (51, 52).

10. Dispositif selon la revendication 9, **caractérisé en ce qu'**il est prévu un premier tambour (52), qui enroule le film (4) pendant la poursuite, et un deuxième tambour (51), qui déroule le film pendant la poursuite, et **en ce qu'**une section de film, qui présente la section active dans cette position du film (4), est disposée entre le premier et le deuxième tambour, de préférence tendue au-dessus de l'élément solaire (1).

11. Dispositif selon l'une quelconque des revendications précédentes, **caractérisé en ce que** les sections différentes sont disposées les unes à côté des autres dans la direction de la poursuite sur et/ou dans le corps optique (4), les sections étant conçues comme des sections passant l'une dans l'autre de manière continue ou comme des sections discrètes séparées.

12. Dispositif selon l'une quelconque des revendications précédentes, **caractérisé en ce que** le corps optique (4) est conçu comme un corps rigide ou souple.

13. Dispositif selon l'une quelconque des revendications précédentes, **caractérisé en ce que** le corps optique (4) ou le film (4) présente au moins une zone disposée en couches avec une structure déviant et/ou concentrant la lumière.

14. Dispositif selon l'une quelconque des revendications précédentes, **caractérisé en ce que** le film (4) est réfléchi sur la face tournée vers la source de lumière.

15. Dispositif selon l'une quelconque des revendications précédentes, **caractérisé en ce que** la structure concentrant la lumière est formée comme un film de concentration (4) qui présente la structure d'une lentille diffractive (4a) ou d'un miroir diffractif.

16. Dispositif selon la revendication 15, **caractérisé en ce que** le film présente plusieurs zones de structure de lentille ou de miroir différentes disposées l'une derrière l'autre dans la direction de poursuite.
